# EUROPÄISCHE PATENTSCHRIFT

(11) **EP 1 307 667 B1**
(45) Veröffentlichungstag und Bekanntmachung des Hinweises auf die Patenterteilung: **27.07.2005**
(21) Anmeldenummer: 01953111.0
(22) Anmeldetag: 19.06.2001
(51) Int. Cl.: F16F 1/373, B60T 8/36

(54) **VORRICHTUNG ZUR ELASTISCHEN LAGERUNG EINES HYDRAULISCHEN AGGREGATS EINER FAHRZEUGBREMSANLAGE IN EINEM FAHRZEUG**
DEVICE FOR THE ELASTIC MOUNTING OF A HYDRAULIC UNIT IN A MOTOR VEHICLE BRAKING SYSTEM ON A VEHICLE
DISPOSITIF DE MONTAGE ELASTIQUE D'UN GROUPE HYDRAULIQUE D'UN SYSTEME DE FREINAGE DANS UN VEHICULE

(30) Priorität: 27.07.2000 DE 10036575
(43) Veröffentlichungstag der Anmeldung: 07.05.2003
(73) Patentinhaber: ROBERT BOSCH GMBH, 70442 Stuttgart (DE)
(72) Erfinder: SCHLITZKUS, Michael, 87463 Dietmannsried (DE); SCHWARZ, Rainer, 87509 Immenstadt (DE); WEH, Andreas, 87471 Durach (DE)
(86) Internationale Anmeldenummer: PCT/DE2001/002265
(87) Internationale Veröffentlichungsnummer: WO 2002/010610

(56) Entgegenhaltungen:
- EP-A- 0 715 086
- WO-A-98/12467
- DE-A- 19 724 177
- FR-A- 1 260 978
- GB-A- 414 819
- US-A- 3 350 042
- US-A- 5 685 150

## Beschreibung

### Stand der Technik

Die Erfindung geht aus von einer Vorrichtung nach der Gattung des Patentanspruchs 1.

Es ist schon eine solche Vorrichtung bekannt (DE 197 24 177 A1), welche eine Konsole mit einem unten liegenden Steg und zwei rechtwinklig vom Steg aufragenden, mit Abstand zueinander angeordneten Schenkeln hat. In den Schenkeln ist jeweils eine nach oben offene Lagerschale ausgebildet. Der Steg ist dagegen mit einem nach oben gerichteten Bolzen versehen. Ein hydraulisches Aggregat einer Fahrzeugbremsanlage ist von oben in die Konsole eingesetzt. Dabei greift der Bolzen unter Zwischenanordnung eines buchsenförmigen, elastomeren Elements in eine Ausnehmung an der Unterseite des Aggregats ein. In den Lagerschalen der Schenkel werden dagegen buchsenförmige, elastomere Elemente aufgenommen, welche an zwei voneinander abgewandten Seitenflächen des Aggregats mittels Schrauben befestigt sind. Zur Lagesicherung des Aggregats in der Konsole sind die Lagerschalen auf ihrer offenen Seite von Spangen übergriffen, welche mit Rasteingriff an den Schenkeln der Konsole befestigt sind.

Die Konsole ist im Motorraum des Fahrzeugs an dessen Karosserie angebracht.

### Vorteile der Erfindung

Die erfindungsgemäße Vorrichtung mit den Merkmalen des Patentanspruchs 1 hat demgegenüber den Vorteil, dass allein durch Verformen des jeweiligen elastomeren Elements eine form- und kraftschlüssige Verbindung zwischen dem hydraulischen Aggregat und der Konsole hergestellt wird. Separate Bauteile zur Lagesicherung des Aggregats sind daher nicht erforderlich.

Durch die in den Unteransprüchen aufgeführten Maßnahmen sind vorteilhafte Weiterbildungen und Verbesserungen der im Patentanspruch 1 beschriebenen Vorrichtung gegeben.

Mit der Ausgestaltung der Vorrichtung nach Anspruch 2 ist eine 3-Punkt-Lagerung des Aggregates geschaffen, bei der die an dem zweiten Schenkel der Konsole aufgenommenen elastomeren Elemente einer Stirnfläche des Aggregats zugeordnet sein können, was zu einer Minimierung des erforderlichen Einbauraumes des Aggregats im Fahrzeug beiträgt.

In den Unteransprüchen 3, 4 und 5 sind zweckmäßige Formgebungen für das elastomere Element und die Spannmittel beschrieben.

Mit der Weiterbildung der Erfindung nach Anspruch 6 ist eine Baugruppe geschaffen, die separat vom Aggregat montiert und geprüft werden kann.

### Zeichnung

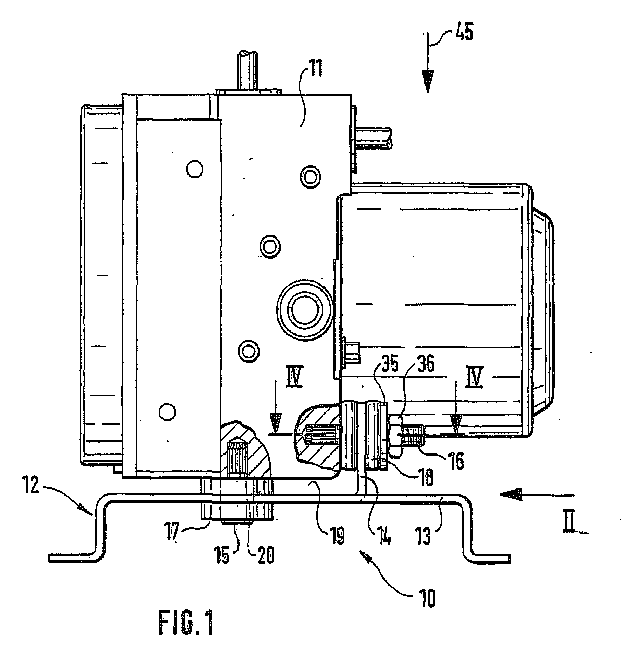

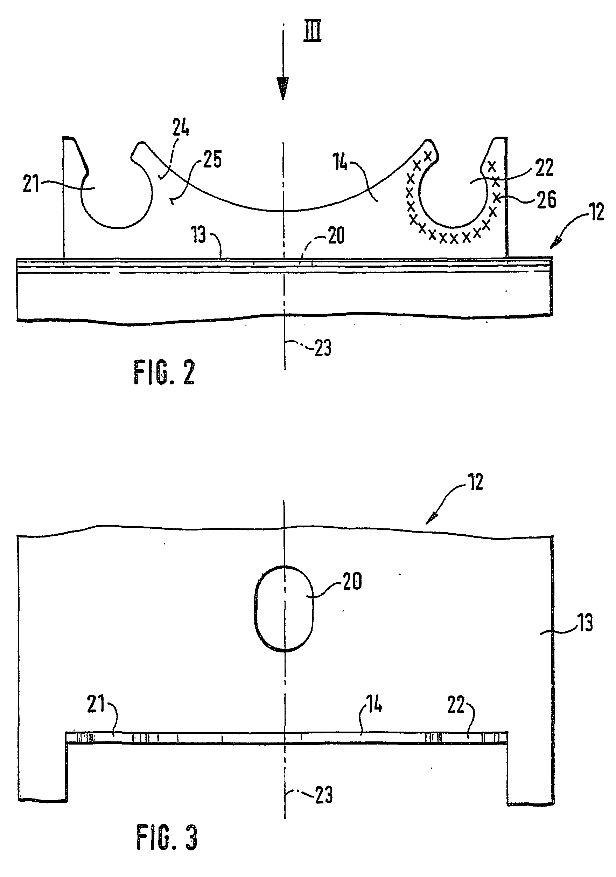

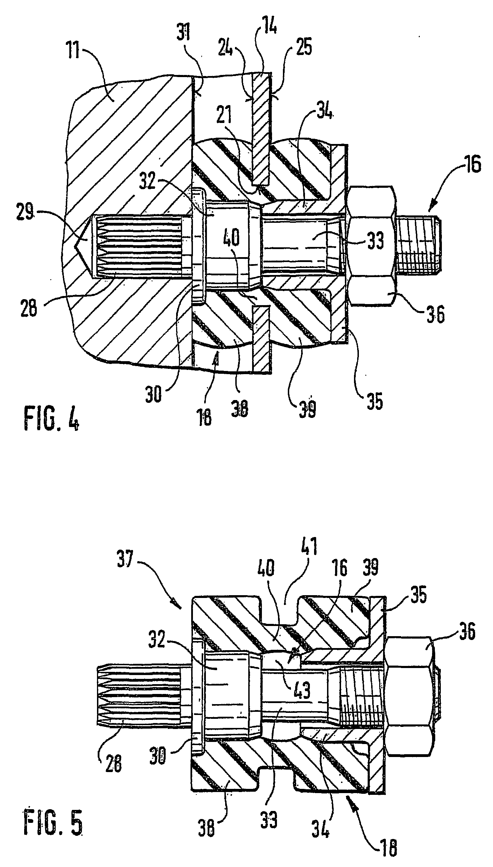

Ein Ausführungsbeispiel der Erfindung ist in der Zeichnung vereinfacht dargestellt und in der nachfolgenden Beschreibung näher erläutert. Es zeigen Figur 1 in Seitenansicht eine Vorrichtung zur elastischen Lagerung eines hydraulischen Aggregates einer Fahrzeugbremsanlage mittels einer Konsole, Figur 2 einen Abschnitt der Konsole in Richtung des Pfeils II in Figur 1 gesehen in größerem Maßstab, Figur 3 eine Draufsicht auf den Abschnitt der Konsole, in Richtung des Pfeils III in Figur 2 gesehen, Figur 4 einen Schnitt in größerem Maßstab entlang der Linie IV-IV in Figur 1 durch axial verspannte Befestigungsmittel des Aggregates und Figur 5 die Befestigungsmittel gemäß Figur 4, jedoch als unverspannte Baugruppe dargestellt.

### Beschreibung des Ausführungsbeispiels

Eine in Figur 1 der Zeichnung dargestellte Vorrichtung 10 zur elastischen Lagerung eines hydraulischen Aggregats 11 einer im übrigen nicht wiedergegebenen Fahrzeugbremsanlage weist eine Konsole 12 auf, welche, wie in der Figur lediglich schematisch angedeutet, mit einer Karosserie eines Fahrzeugs fest verbunden ist. Die Konsole 12 besitzt zwei rechtwinklig zueinander verlaufende Schenkel 13 und 14, an denen das Aggregat 11 mittels von Bolzen 15 bzw. 16 durchgriffenen elastomeren Elementen 17 bzw. 18 gelagert ist. Der an der Unterseite 19 des Aggregats 11 befindliche Bolzen 15 ist in dieses zu einem Teil seiner Länge eingepresst und durchgreift das hohlzylindrisch ausgebildete elastomere Element 17. Dieses ist in einen Durchbruch 20 in Form eines ovalen oder elliptischen Langlochs in dem parallel zur Unterseite 19 verlaufenden ersten Schenkel 13 der als Blechformteil ausgebildeten Konsole 12 eingeknüpft. An dem vom ersten Schenkel 13 der Konsole 12 aufragenden zweiten Schenkel 14 sind zwei mit Abstand angeordnete Ausnehmungen 21 und 22 ausgebildet, die symmetrisch zu einer rechtwinklig zur Ebene dieses Schenkels 14 verlaufenden Ebene 23 liegen, in welcher sich der Bolzen 15 und das Langloch des Durchbruchs 20 mit seiner Längsachse erstrecken (Figuren 2 und 3). Die beiden Ausnehmungen 21 und 22 weisen einen nach oben offenen, annähernd kreisförmigen Umriss auf. Im Bereich der beiden Ausnehmungen 21, 22 können die Seitenflächen 24 und 25 des zweiten Schenkels 14 mit Prägungen 26 versehen sein, wie dies in Figur 2 bei der Ausnehmung 22 schematisch angedeutet ist. Die in Übereinstimmung mit der Anzahl der beiden Ausnehmungen 21 und 22 zweifach vorhandenen Bolzen 16 und elastomeren Elemente 18 sind baugleich; die nachfolgende Beschreibung bezieht sich daher auf die an den beiden Orten angebrachten Bauteile.

Der Bolzen 16 weist einen längs geriffelten Einpresszapfen 28 auf, mit dem er unverdrehbar in einer Aufnahmebohrung 29 des Aggregats 11 mit Presssitz aufgenommen ist (Figur 4). Abweichend vom Ausführungsbeispiel kann der Zapfen 28 mit einem Gewindeabschnitt versehen und der Bolzen 16 durch eine Schraubverbindung im Aggregat 11 befestigt sein. An den Einpresszapfen 28 schließt sich ein durchmessergrößerer Teller 30 des Bolzens 16 an, mit dem dieser axial an einer rechtwinklig zur Unterseite 19 verlaufenden Stirnfläche 31 des Aggregats 11 abgestützt ist. Auf den Teller 30 folgt ein im Durchmesser verringerter Abschnitt 32, von dem ein gegenüber diesem im Durchmesser verkleinerter Schraubenschaft 33 ausgeht. Auf dem Bolzen 16 sind das elastomere Element 18, eine Buchse 34 mit Flansch 35 und einer Mutter 36 aufgenommen. Diese Bauteile bilden eine als Befestigungsmittel für das Aggregat 11 am zweiten Schenkel 14 der Konsole dienende Baugruppe 37, welche vor ihrer Anbringung am Aggregat in einer Form vormontierbar ist, wie dies Figur 5 zeigt.

Das auf den Bolzen 16 gefügte elastomere Element 18 hat zwei Endabschnitte 38 und 39 gleichen Durchmessers, welche durch einen Mittelabschnitt 40 kleineren Durchmessers verbunden sind. Durch diese Formgebung weist das hohlzylindrische Element 18 eine umlaufende Ringnut 41 auf, deren Durchmesser am Grund um ein gewisses Maß größer ist als der Durchmesser der jeweiligen Ausnehmung 21 bzw. 22 im zweiten Schenkel 14 der Konsole 12 und deren Breite größer ist als die Dicke des zweiten Schenkels.

Das elastomere Element 18 ist in vormontiertem Zustand axial unverspannt auf dem Bolzen 16 aufgenommen (Figur 5). Es umschließt mit seinem einen Endabschnitt 38 den in seinen Innenquerschnitt passend eingreifenden Abschnitt 32 und den Teller 30 des Bolzens 16. Die auf den Bolzen 16 aufgesteckte Buchse 34 hat den gleichen Außendurchmesser wie der Abschnitt 32 und durchgreift passend den anderen Endabschnitt 39 des elastomeren Elements 18. Der Flansch 35 ist auf den Außendurchmesser des elastomeren Elements 18 abgestimmt. Die Buchse 34 mit Flansch 35 und die Mutter 36 bilden Spannmittel, mit denen das elastomere Element 18 axial verkürzbar ist (Figur 4).

Wie Figur 5 deutlich zeigt, nimmt die passend auf die axiale Länge des Abschnitts 39 abgestimmte Buchse 34 einen Abstand zu dem Abschnitt 32 ein, der sich zusammen mit dem Teller 30 axial über die Länge des Endabschnitts 38 des elastomeren Elements 18 erstreckt. Damit ergibt sich in unverspanntem Zustand des elastomeren Elements 18 ein dem Mittelabschnitt 40 zugeordneter, den Schraubenschaft 33 des Bolzens 16 umhüllender Ringspalt 43, sodass das elastomere Element 18 im Montagezustand gemäß Figur 5 im Bereich seines Mittelabschnitts 40 radial nach innen nachgiebig ist.

Für die Montage des hydraulischen Aggregates 11 an der Konsole 12 werden der Bolzen 15 und zwei anhand Figur 5 vorbeschriebene Baugruppen 37 aus Bolzen 16, elastomerem Element 18, Buchse 34 mit Flansch 35 und Mutter 36 am Aggregat 11 gefügt. Das dem an der Unterseite 19 des Aggregats 11 befindlichen Bolzen 15 zugeordnete elastomere Element 17 kann auf den Bolzen aufgesteckt oder bereits in den Durchbruch 20 am ersten Schenkel 13 der Konsole 12 eingeknüpft sein. Das derart vervollständigte Aggregat 11 wird in der durch einen Pfeil 45 in Figur 1 angedeuteten Anbringrichtung auf die Konsole 12 abgesenkt. Dabei greift der Bolzen 15, der an seinem freien Ende eine wulstförmige, umlaufende Verdickung haben kann, in das elastomere Element 17 ein (oder das am Bolzen vormontierte elastomere Element durchdringt den Durchbruch 20 des Schenkels 13). Zugleich wird die jeweilige Baugruppe 37 aus Bolzen 16, elastomerem Element 18 und Spannmittel 34, 35, 36 in die zugeordnete, entgegen der Anbringrichtung nach oben offene Ausnehmung 21 bzw. 22 gefügt. Dabei unterliegt der Mittelabschnitt 40 am elastomeren Element 18 einer Verformung nach radial innen, wenn die trichterförmige Mündung der Ausnehmung 21 bzw. 22 überwunden wird. Mit Erreichen der Endlage des Aggregats 11 an der Konsole 12 wird die Deformation des Mittelabschnittes 40 des elastomeren Elementes 18 weitgehend durch dessen Eigenelastizität rückgängig gemacht.

Darauffolgend wird die jeweilige Mutter 36 angezogen, sodass die Buchse 34 mit Flansch 35 einer Längsverschiebung auf dem Schraubenschaft 33 und das elastomere Element 18 einer Verspannung in axialer Richtung mit radialer Aufweitung und axialer Verkürzung unterliegt. Aufgrund der axialen Verkürzung verschiebt sich das hydraulische Aggregat 11 in Richtung auf den zweiten Schenkel 14 der Konsole 12. Zugleich verschiebt sich auch das elastomere Element 17 innerhalb des Durchbruchs 20 in Richtung von dessen Längsachse, ohne jedoch hierbei den Formschluss mit dem zweiten Schenkel 13 der Konsole 12 zu verlieren.

Der Schraubvorgang wird durch Anschlagen der Buchse 34 an dem Abschnitt 32 des Bolzens 16 abgeschlossen. In diesem in Figur 4 dargestellten Zustand ist der Ringspalt 43 des elastomeren Elements 18 von dem Abschnitt 32 des Bolzens 16 und der Buchse 34 völlig ausgefüllt. Das elastomere Element 18 ist derart verformt, dass sein zu mehr als der Hälfte seines Umfangs von dem zweiten Schenkel 14 der Konsole 12 umgriffene Mittelabschnitt 40 mit radialer Pressung innen an der Ausnehmung 21 bzw. 22 angreift. Die beiden Endabschnitte 38 und 39 des elastomeren Elements 18 greifen dagegen mit axialer Pressung an den beiden Seitenflächen 24 und 25 des zweiten Schenkels 14 an. Durch das axiale Verspannen des elastomeren Elements 18 wird somit eine kraft- und formflüssige Verbindung mit dem zweiten Schenkel 14 der Konsole 12 erzielt, wobei die Prägung 26 unterstützend wirkt. Mit der montagetechnisch günstig zu erzeugenden elastischen Lagerung des Aggregats 11 an der Konsole 12 wird eine Übertragung von störenden Schwingungen des Aggregats auf die Karosserie des Fahrzeugs weitgehend vermieden.

## Patentansprüche

1. Vorrichtung (10) zur elastischen Lagerung eines hydraulischen Aggregats (11) einer Fahrzeugbremsanlage in einem Fahrzeug,
mit einer zwei rechtwinklig zueinander verlaufende Schenkel (13, 14) aufweisenden Konsole (12), an der das Aggregat (11) mittels von Bolzen (15, 16) durchgriffenen elastomeren Elementen (17, 18) lagerbar ist,
wobei ein in Anbringrichtung (45) des Aggregats (11) verlaufender erster Bolzen (15) dem sich rechtwinklig zur Anbringrichtung (45) erstreckenden ersten Schenkel (13) der Konsole (12) zugeordnet ist,
während der zweite Schenkel (14) der Konsole (12) wenigstens eine entgegen der Anbringrichtung (45) offene Ausnehmung (21, 22) zur Aufnahme eines elastomeren Elements (18) mit zur Ebene des zweiten Schenkels (14) rechtwinklig verlaufenden Achse hat,
**gekennzeichnet durch** die weiteren Merkmale:
- das dem zweiten Schenkel (14) der Konsole (12) zugeordnete, hohlzylindrische elastomere Element (18) hat einen im Durchmesser verringerten Mittelabschnitt (40), der in die Ausnehmung (21, 22) des zweiten Schenkels (14) der Konsole (12) eingebracht ist,
- der Mittelabschnitt (40) des elastomeren Elements (18) ist zu mehr als der Hälfte seines Umfangs von dem zweiten Schenkel (14) der Konsole (12) umgriffen,
- das dem zweiten Schenkel (14) der Konsole (12) zugeordnete elastomere Element (18) ist **durch** auf einem zweiten Bolzen (16) angeordnete Spannmittel (34, 35, 36) sowohl radial aufgeweitet als auch axial verkürzt,
- das elastomere Element (18) ist mit seinem Mittelabschnitt (40) an die Ausnehmung (21, 22) und mit seinem beiderseits des Mittelabschnittes (40) angrenzenden Endabschnitten (38, 39) an die beiden die Ausnehmung (21, 22) begrenzenden Seitenflächen (24, 25) des zweiten Schenkels (14) der Konsole (12) angepresst.

2. Vorrichtung nach Anspruch 1, **dadurch gekennzeichnet, dass** am zweiten Schenkel (14) der Konsole (12) zwei mit Abstand angeordnete Ausnehmungen (21, 22) zur Aufnahme eines elastomeren Elements (18) ausgebildet sind, die symmetrisch zu einer Ebene (23) liegen, in welcher sich der erste Bolzen (15) erstreckt.

3. Vorrichtung nach Anspruch 1, **dadurch gekennzeichnet, dass** der zweite Bolzen (16) in das Aggregat (11) eingepresst oder eingeschraubt ist und angrenzend an das Aggregat (11) einen in den Innenquerschnitt des elastomeren Elements (18) eingreifenden Abschnitt (32) hat, von dem ein durchmesserkleinerer Schraubenschaft (33) ausgeht, auf dem als Spannmittel eine Buchse (34) mit Flansch (35) und eine Mutter (36) aufgenommen sind.

4. Vorrichtung nach Anspruch 3, **dadurch gekennzeichnet, dass** die Buchse (34) in den Innenquerschnitt des elastomeren Elements (18) eingreift, während der Flansch (35) mit dem elastomeren Element (18) wenigstens annähernd durchmessergleich ist.

5. Vorrichtung nach Anspruch 3, **dadurch gekennzeichnet, dass** der aggregatseitige Abschnitt (32) des zweiten Bolzens (16) und die Buchse (34) eine den Endabschnitten (38, 39) des unverkürzten elastomeren Elements (18) angepasste Länge haben und der Abschnitt (32) des zweiten Bolzens (16) einen Anschlag für die Buchse (34) bildet.

6. Vorrichtung nach Anspruch 3, **dadurch gekennzeichnet, dass** der zweite Bolzen (16), das mit seinem einen Endabschnitt (38) auf den aggregatseitigen Abschnitt (32) des zweiten Bolzens (16) aufgesteckte elastomere Element (18), die in den anderen Endabschnitt (39) des elastomeren Elements (18) eingreifende Buchse (34) mit Flansch (35) sowie die auf den Schraubenschaft (33) geschraubte Mutter (36) eine Baugruppe (37) bilden.

7. Vorrichtung nach Anspruch 1, **dadurch gekennzeichnet, dass** das von dem ersten Bolzen (15) durchgriffene elastomere Element (17) in einem in dem ersten Schenkel (13) der Konsole (12) ausgebildeten Durchbruch (20) aufgenommen ist, welcher wenigstens annähernd als Langloch geformt ist, dessen Längsachse sich rechtwinklig zur Ebene des zweiten Schenkels (14) der Konsole (12) erstreckt.

## Claims

1. Apparatus (10) for the elastic mounting of a hydraulic assembly (11) of a vehicle brake system in a vehicle, having a bracket (12) which has two limbs (13, 14) which extend at right angles with respect to one another, on which bracket (12) the assembly (11) can be mounted by means of elastomeric elements (17, 18) which are penetrated by bolts (15, 16), a first bolt (15) which extends in the attachment direction (45) of the assembly (11) being assigned to the first limb (13) of the bracket (12), which first limb (13) extends at right angles with respect to the attachment direction (45), while the second limb (14) of the bracket (12) has at least one recess (21, 22) which is open counter to the attachment direction (45) and is intended to hold an elastomeric element (18) having an axis which extends at right angles with respect to the plane of the second limb (14), **characterized by** the following features:
- the hollow-cylindrical elastomeric element (18) which is assigned to the second limb (14) of the bracket (12) has a centre section (40) which is of reduced diameter and is inserted into the recess (21, 22) of the second limb (14) of the bracket (12),
- more than half of the circumference of the centre section (40) of the elastomeric element (18) is surrounded by the second limb (14) of the bracket (12),
- the elastomeric element (18) which is assigned to the second limb (14) of the console (12) is both widened radially and shortened axially by clamping means (34, 35, 36) which are arranged on a second bolt (16),
- the centre section (40) of the elastomeric element (18) is pressed against the recess (21, 22), and the end sections (38, 39) of the said elastomeric element (18) which adjoin the centre section (40) on both sides are pressed against the two side surfaces (24, 25) of the second limb (14) of the bracket (12) which delimit the recess (21, 22).

2. Apparatus according to Claim 1, **characterized in that** two recesses (21, 22) which are arranged spaced apart and are intended to hold an elastomeric element (18) are formed on the second limb (14) of the bracket (12), which recesses (21, 22) lie symmetrically with respect to a plane (23) in which the first bolt (15) extends.

3. Apparatus according to Claim 1, **characterized in that** the second bolt (16) is pressed or screwed into the assembly (11) and, adjoining the assembly (11), has a section (32) which engages into the inner cross section of the elastomeric element (18) and from which a screw shaft (33) of smaller diameter protrudes, on which screw shaft (33) a bush (34) with a flange (35) and a nut (36) are held as clamping means.

4. Apparatus according to Claim 3, **characterized in that** the bush (34) engages into the inner cross section of the elastomeric element (18), while the flange (35) has at least approximately the same diameter as the elastomeric element (18).

5. Apparatus according to Claim 3, **characterized in that** the assembly-side section (32) of the second bolt (16) and the bush (34) have a length which is adapted to the end sections (38, 39) of the unshortened elastomeric element (18), and the section (32) of the second bolt (16) forms a stop for the bush (34).

6. Apparatus according to Claim 3, **characterized in that** a module (37) is formed by the second bolt (16), the elastomeric element (18) whose one end section (38) is plugged onto the assembly-side section (32) of the second bolt (16), the bush (34) which has a flange (35) and engages into the other end section (39) of the elastomeric element (18), and the nut (36) which is screwed onto the screw shaft (33).

7. Apparatus according to Claim 1, **characterized in that** the elastomeric element (17) which is penetrated by the first bolt (15) is held in an aperture (20) which is formed in the first limb (13) of the bracket (12) and is shaped at least approximately as a slot whose longitudinal axis extends at right angles with respect to the plane of the second limb (14) of the bracket (12).

## Revendications

1. Dispositif (10) de montage élastique d'un groupe hydraulique (11) d'un système de freinage d'un véhicule, dans lequel :
- le groupe (11) est monté sur une console (12), présentant deux ailes (13, 14) perpendiculaires entre elles, à l'aide d'éléments (17, 18) en élastomère traversés par des boulons (15, 16),
- un premier boulon (15), orienté dans la direction de montage (45) du groupe (11), est associé à la première aile (13) de la console (12) perpendiculaire à la direction de montage (45), et
- la seconde aile (14) de la console (12) présente au moins un évidement (21, 22) ouvert dans le sens opposé à la direction de montage (45), pour accueillir un élément en élastomère (18) ayant son axe perpendiculaire au plan de la seconde aile (14),
**caractérisé en ce que**
- l'élément en élastomère (18), cylindrique et creux, qui est associé à la seconde aile (14) de la console (12), présente une partie centrale (40) de diamètre réduit logée dans l'évidement (21, 22) de la seconde aile (14) de la console (12),
- la partie centrale (40) de l'élément en élastomère (18) est en prise, sur plus de la moitié de sa périphérie, avec la seconde aile (14) de la console (12),
- l'élément en élastomère (18) associé à la seconde aile (14) de la console (12) est expansé radialement et raccourci axialement, par l'intermédiaire d'un moyen de serrage (34, 35, 36) monté sur le second boulon (16), et
- la partie centrale (40) de l'élément en élastomère (18) est comprimée, sur l'évidement (21, 22) et par ses parties d'extrémité (38, 39) délimitant de part et d'autre la partie centrale (40), sont comprimées sur les deux portées latérales (24, 25) délimitant l'évidement (21, 22) de la seconde aile (14) de la console (12).

2. Dispositif selon la revendication 1,
**caractérisé en ce que**
la seconde aile (14) de la console (12) comporte deux évidements (21, 22) espacés l'un de l'autre et servant à accueillir un élément en élastomère (18), ces évidements étant symétriques par rapport à un plan (23) dans lequel se trouve le premier boulon (15).

3. Dispositif selon la revendication 1,
**caractérisé en ce que**
le second boulon (16) est emmanché à force ou vissé dans le groupe (11) et présente, en limite de ce groupe, une partie (32) qui pénètre dans la section interne de l'élément en élastomère (18) et d'où part une tige de vis (33) de diamètre plus faible sur laquelle on monte, comme moyens de pression, une douille (34) avec une bride (35) et un écrou (36).

4. Dispositif selon la revendication 3,
**caractérisé en ce que**
la douille (34) est en prise dans la section interne de l'élément en élastomère (18), tandis que la bride (35) présente au moins approximativement le même diamètre que l'élément en élastomère (18).

5. Dispositif selon la revendication 3,
**caractérisé en ce que**
la partie (32) du second boulon (16), située du côté du groupe, et la douille (34) ont des longueurs adaptées à celles des parties d'extrémité (38, 39) de l'élément en élastomère (18) quand il n'est pas raccourci, et la partie (32) du second boulon (16) forme une butée pour la douille (34).

6. Dispositif selon la revendication 3,
**caractérisé en ce que**
le second boulon (16), l'élément (18) en élastomère dont la partie d'extrémité (38) est emmanchée sur la partie (32), située du côté du groupe, du second boulon (16), la douille (34) avec sa bride (35) engagée dans l'autre partie d'extrémité (39) de l'élément en élastomère (18), ainsi que l'écrou (36) vissé sur la tige de vis (33), constituent un groupe constructif (37).

7. Dispositif selon la revendication 1,
**caractérisé en ce que**
l'élément en élastomère (17) traverse par le premier boulon (15) est logé dans une ouverture (20) pratiquée dans la première aile (13) de la console (12), et cette ouverture a au moins approximativement la forme d'un trou allongé dont l'axe longitudinal est perpendiculaire au plan de la seconde aile (14) de la console (12).
